# EUROPEAN PATENT SPECIFICATION

(11) **EP 2 603 046 B1**
(45) Date of publication and mention of the grant of the patent: **06.08.2014**
(21) Application number: 11306614.6
(22) Date of filing: 05.12.2011
(51) Int. Cl.: H04W 48/18, H04W 48/00, H04W 8/00, H04W 84/12, H04W 48/08

(54) **Communication process and communication network comprising a local access network discovery and selection function, L-ANDSF**
Kommunikationsverfahren und Kommunikationsnetzwerk mit Erkennungs- und Auswahlfunktion für ein lokales Zugangsnetzwerk, L-ANDSF
Procédé de communication et réseau de communication comportant une fonction de découverte et de sélection de réseau d'accès local, L-ANDSF

(43) Date of publication of application: 12.06.2013
(73) Proprietor: Alcatel Lucent, 75007 Paris (FR)
(72) Inventor: Orlandi, Barbara, 91620 NOZAY (FR); Thiebaut, Laurent, 91620 NOZAY (FR); Lafragette, Jean-Luc, 91620 NOZAY (FR)
(74) Representative: Therias, Philippe

(56) References cited:
- US-A1- 2011 044 253
- Alcatel Lucent: "Wi-Fi Roaming - Building on ANDSF and Hotspot2.0", Internet Alcatel Lucent White Papers, 27 February 2012 (2012-02-27), pages 1-45, XP002677915, Retrieved from the Internet: URL:www.alcatel-lucent.com [retrieved on 2012-06-14]
- 3GPP TS 23.402 V11.0.0 (2011-09): "3GPP TS 23.402 V11.0.0 (2011-09); 3rd Generation Partnership Project; Technical Specification Group Services and System Aspects; Architecture enhancements for non-3GPP accesses (Release 11)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.0.0, 24 August 2011 (2011-08-24), pages 1-232, XP050553750, [retrieved on 2011-08-24]
- 3GPP TS 24.302 V11.0.0 (2011-09): "3GPP TS 24.302 V11.0.0 (2011-09); 3rd Generation Partnership Project; Technical Specification Group Core Network and Terminals; Access to the 3GPP Evolved Packet Core (EPC) via non-3GPP access networks; Stage 3 (Release 11)", 3GPP STANDARD; 3GPP TS 24.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.0.0, 28 September 2011 (2011-09-28), pages 1-58, XP050554126, [retrieved on 2011-09-28]
- 3GPP TS 24.312 V11.0.0 (2011-09): "3GPP TS 24.312 V11.0.0 (2011-09); 3rd Generation Partnership Project; Technical Specification Group Core Network and Terminals; Access Network Discovery and Selection Function (ANDSF) Management Object (MO) (Release 11)", 3GPP STANDARD; 3GPP TS 24.312, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.0.0, 28 September 2011 (2011-09-28), pages 1-157, XP050554133, [retrieved on 2011-09-28]
- ALCATEL-LUCENT: "Policy based terminal triggered, ANDSF decided access selection", 3GPP DRAFT; S2-081658_REVISION OF 1355_ANDSF DISCUSSION V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Athens; 20080216, 16 February 2008 (2008-02-16), XP050263998, [retrieved on 2008-02-16]
- HUAWEI: "Discussion about ANDSF", 3GPP DRAFT; S2-083355, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265579, [retrieved on 2008-05-02]

## Description

### FIELD OF THE INVENTION

The invention generally relates to communication networks.

### BACKGROUND OF THE INVENTION

With the development and the deployment of various access technologies, the mobile communication system is evolving towards a dense wireless environment where multiple access networks highly overlap and complement each other in terms of total available throughput, transmission delay and operational costs.

Network architectures have to consider the increase in number of subscribers and their highly diversified resource requirements and to select the momentary best access networks for the most efficient delivery of the applications including the preferences from the user, the core network and the service provider.

This mechanism, named access network selection mechanism, presumes that one access network is selected for the communication of the mobile device by either the network or the mobile device itself and that a handover to the selected access network is executed in order to obtain a dynamic best connection according to the momentary characteristics of the access network and to the momentary requirements of the mobile device.

Complementing the selection, an Access Network Discovery Mechanism (ANDM) is required which determines the access networks located in the vicinity of the mobile device, thus available to be selected and gives policies to control the selection mechanism. The currently deployed ANDM presumes that (in case of selection not involving only 3gpp based radio) the mobile device decides independently the access through which it communicates using local configuration and semi-static configuration received from the network (e.g. from the ANDSF defined in 3gpp Release 8/9/10/11 specifications). However, the mobile device is not aware of the momentary context in the network, therefore this mechanism does not offer guarantees that the selected access is able to sustain the communication with the appropriate quality and at a satisfying operational cost.

Also for the discovery mechanism, the current solution relies on multiple scans of the wireless environment a power consuming operation which has to be executed by the mobile device for the discovery of available accesses.

To fulfil the requirements of the operators for the heterogeneous wireless broadband environment, the 3^{rd} Generation Partnership Project (3GPP) initiated the standardization process for the Evolved Packet Core (EPC) as an all-IP based multi-access core network which integrates wireless technologies standardized by 3GPP-i.e. LTE, LTE-A, UMTS, GPRS-and outside-3GPP -i.e. cdma2000, WiFi, WiMAX etc.

Recognizing the need for the integration into a converged wireless environment of 3GPP and non-3GPP access technologies, 3GPP initiated the standardization of the EPC as an all-IP architecture which is able to support access control, subscription based resource reservations, security and seamless mobility between the different access networks.

However, for the interconnection with or between the other non-3GPP access technologies (e.g. WiMAX, WiFi), the network discovery and selection mechanism does not rely on access network specific functionality due to separate standardization groups defining the 3gpp based radio and the non 3gpp based radio. Especially there is no inter Radio Access Network communication between a 3GPP radio and a non 3gpp Radio (each being ignorant of the existence of the other). Because of this, the network discovery and selection functionality was introduced on top of the EPC architecture as an enabler.

It assumes that two functional entities are deployed, one in the network-denominated as Access Network Discovery and Selection Function (ANDSF) and one in the user endpoint.

The user endpoint UE is able to receive discovery information and selection policies from the ANDSF using a logical interface. On this interface, Open Mobile Alliance Device Management (OMA-DM) protocol is deployed, which supports dynamic updating mechanisms.

A Management Object (MO) for the network discovery and selection functionality was specified by 3GPP. The MO describes the information exchanged between the UE and the ANDSF and contains the discovery information for the different access networks and the inter-system handover policies which enable the mobile device to execute the access network selection according to the requirements of the network provider. For multi-access capable mobile devices, the MO was extended to include information on the device interfaces that can be used for the different data flows. The UE transmits to the ANDSF the momentary location as geo-location or as information on the accesses to which it is currently connected to. For example, for a UE connected to an LTE access network, the location information may contain apart from the geo-location, the operator domain, the Tracking Area Code and the cell identification. Each of these pieces of information can localize the mobile device in the environment with a certain level of granularity.

The ANDSF responds to the UE with a set of policies (such as "Inter-System Mobility Policies" or "ISMP" and "Inter-System Routing Policies" or "ISRP") separated for different physical areas which contain information on the access networks(e.g. for WiFi the SSID and the HESSID), on criteria (e.g. target IP address of an IP packet) to select an access network for sending IP traffic, on validity condition (time, location) for the policy and on a prioritization between the policies and Access Networks.. This information enables the UE to select the target access network restricted to a specific location and time interval, ordered by the operator preference.

The ANDSF maintains a Coverage Map database, which contains static information on the accesses available based on the location.

The 3GPP ANDSF implementation is published in 3GPP TS 23.402, 3GPP TS 24.302 and 3GPP TS 24.312.

Although this solution provides the operators with a minimal mechanism for access network discovery and selection control, the information transmitted from the ANDSF to the UE does not state any information on the availability of the resources that are required for a seamless communication. Also, the information is static. The UE does not have any guarantee that the access networks received are available in the area. For example, a WiFi access network may be available in the vicinity of the UE, but because of various external factors such as radio interference, environmental conditions, operational failure etc, it may not sustain the communication.

The access network discovery and selection function ANDSF as currently standardized by 3GPP thus enables the network operator with a minimal operational cost to minimally control over the access networks through which the mobile device communicates.

The ANDSF specified by 3GPP provides discovery information about available non-3GPP access networks as well as operator policies regarding the use of those non-3GPP access networks. Two types of ANDSF are defined: Home-ANDSF (H-ANDSF) for policies and discovery information from the home network operator and Visited-ANDSF (V-ANDSF) for the roaming case. In both cases an ANDSF server would provide semi-static information over a wide area. When the non-3GPP access is based on small cells (WiFi access points) then it is virtually impossible to take into account dynamic local conditions for an update of the policy as these can change very fast based on interferences and number of users. Furthermore such updates would only be meaningful to a very small number of UE, i.e. those located under the coverage or nearby the access point.

US patent application US 2011/0044253 A1 discloses an ANDSF, which provides local information and policies that are applicable only to certain geographical areas based on cell or tracking area information delivered from a User Equipment UE.

### SUMMARY OF THE INVENTION

It is an object of the invention to offer the operator a mean of providing local and real time related updates of policies to UE.

It is another object of the invention to offer the operator a mean of providing local and real time related updates of policies to the UE while reusing existing mechanisms from the UE point of view.

The invention provides a communication process within a communication network according to the subject-matter of claim 1.

The communication process may include the following features, according to various embodiments:
- said information include authorization information and/or addressing information and/or hysteresis information and/or possibly protocol information,
- said authorization information indicates to the UE conditions allowing usage of said L-ANDSF,
- said addressing information indicates to the UE how to find at least one L-ANDSF,
- said hysteresis information gives limits to the time where the L-ANDSF policy takes precedence over home or visited ANDSF policy,
- said protocol information provided by the ANDSF indicates which protocols to use to reach the L-ANDSF,
- said addressing information provided by the ANDSF indicates that the actual addressing and protocol to access to the L-ANDSF are provided using local layer 2 or radio signaling such as extensions to 802.11 u.

The invention also provides a communication network according to the subject-matter of Claim 8.

According to various embodiments, the communication network may include some of the following features, possibly combined:
- the L-ANDSF is located within a hotspot access point or controller or within a femto cell or within a DSL box;
- the ANDSF is adapted to provide the public IP address or FQDN of the L-ANDSF;
- the ANDSF is adapted to provide information to look for 802.11u advertised L-ANDSF address or policies;
- the ANDSF is adapted to provide information on the protocol to be used with the L-ANDSF (OMA-DM based ANDSF MO or IEEE 802.21 or IEEE 802.11v);
- alternatively, when 802.11u is referred to by the ANDSF as the way to reach the L-ANDSF, 802.11u based signaling may provide information on the actual protocol to be used to reach the L-ANDSF
- the ANDSF is adapted to provide information on ANQP queries that may be performed prior to attachment, these may include WAN metrics as defined by the Hotspot2.0 initiative and potential thresholds for selection;
- the ANDSF is adapted to provide policy to prefer WLAN with the SSID of the hotspot and usage authorization in the location where the hotspot is available;
- the ANDSF is adapted to provide hysteresis indicating that after an inter RAT handover from non 3GPP to 3GPP access, the UE should not switch again based on ANDSF policies for the duration of the hysteresis;
- the ANDSF is adapted to provide semi-static policies to control UE selection of where to camp such as inter-system mobility policies ISMP and/or inter-system routing policies ISRP.

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key critical elements of the invention or to delineate the scope of the invention. Its sole purpose is to present some concepts in a simplified form as a prelude to the more detailed description that is discussed later.

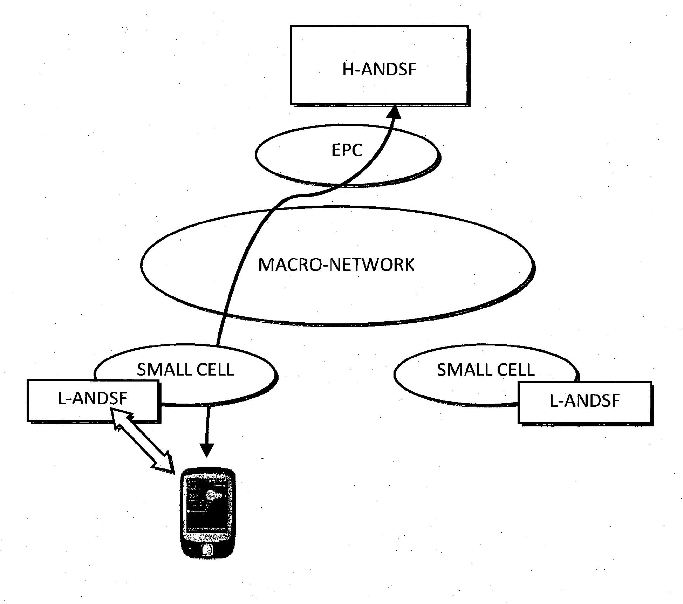

While the invention is susceptible to various modification and alternative forms, specific embodiments thereof have been shown by way of example in the drawing. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawing.

### DETAILED DESCRIPTION OF ILLUSTRATIVE EMBODIMENTS

In the following description ANDSF will refer to the currently 3GPP-defined H-ANDSF or V-ANDSF as opposed to the local-ANDSF (L-ANDSF) that can be co-located with an access point or a home Node B/eNB or an aggregation gateway, or an access point controller equipment.

This L-ANDSF function provides discovery information that could not have been available at the H-ANDSF level (for instance if a H(e)NB also supports a wifi interface, information regarding this Wireless Local Area Network WLAN) and Inter-System Mobility Policies ISMP (as well as Inter-System Routing Policies ISRP) that take into account local real-time conditions (e.g. load, number of users) as well as semi-static information like some services reachability.

As the L-ANDSF is a local resource, traffic between the UE and the L-ANDSF does advantageously not need to be sent via the EPC.

To communicate with the UE the L-ANDSF uses either the OMA-DM based ANDSF protocol or the IEEE 802.21 Media Independent Handover MIH protocol or IEEE 802.11v BSS transition mechanisms or Hotspot2.0 defined ANQP queries or an extension of those queries or a combination of those mechanisms such as the following: the syntax to transfer information per the ANDSF OMA DM Management Object semantic but the protocol to carry the information based on additions to 802.11u ANQP.

The ANDSF model defined in 3GPP TS 24.312 provides the UE with instructions/policies of the operator (received from the ANDSF) regarding usage of an L-ANDSF function.

The additional information added in the ANDSF model is of following types: authorization, addressing, protocol, hysteresis to avoid too frequent inter-RAT handovers.

The authorization information is provided by the ANDSF of the local PLMN to UE and indicates to the UE whether usage of an L-ANDSF is allowed within a certain validity condition (e.g. place and time). When the validity conditions are met local policies provided by the L-ANDSF may override the usual ANDSF policies for the time specified in the hysteresis information.

The authorization information also includes actions that are allowed to be performed by the L-ANDSF for example: performing load-balancing between access points inside a same access network or barring the UE from the current access (or downgrading the priority of this current access). The current access is the one on which the UE is getting access to the L-ANDSF and may e.g. correspond to the local ESSID or the local BSSID (MAC @ of the Access Point AP).

The addressing information indicates to the UE how it will find the L-ANDSF if one is available and allowed. As an example, the addressing information corresponds to the Fully Qualified Domain Name FQDN or IP @ of the L-ANDSF. According to another example, addressing information corresponds to an indication on how this FQDN or IP @ may be fetched by the UE (e.g. via 802.11u) or on whether the address and protocol to be used to reach the L-ANDSF can be directly accessed by layer 2 means (for instance if communication with the L-ANDSF is based on 802.21 or extensions to 802.11 u or ANQP protocol).

The protocol information may be provided by the ANDSF or by extensions of 802.11u signaling (sent by the local WLAN) for those cases where the L-ANDSF implementation follows other standard protocols. Example of other protocols that can provide ANDSF-type information are IEEE 802.21, IEEE 802.11v, 802.11u ANQP extensions defined by or based on the Hotspot2.0 specification.

The Hysteresis information is provided by the ANDSF and allows avoiding ping-pong effect of conflicting rules sent by the ANDSF and the L-ANDSF: hysteresis information give limits to the time where the L-ANDSF policy takes precedence over the global ANDSF policy.

According to one embodiment, corresponding to Wi-Fi offload in operator hotspots, a mobile operator that also owns Wi-Fi hotspots (or has a partnership with another operator) adds an L-ANDSF function co-located with the hotspot access controller that is advertised per 802.11u. In addition to providing via the ANDSF a policy to prefer WLAN with the Service Set Identifier SSID of the hotspot in the location where such a hotspot is available, the ANDSF provides:
- L-ANDSF usage authorization in the location where the hotspot is available. This allows the L-ANDSF to bar the UE from the hotspot during the hysteresis time
   ∘ downgrading the priority for the local ESSID
   ∘ downgrading the priority for a BSSID (MAC @ of the AP)
- way (e.g. 802.11u) to access the L-ANDSF address;
- hysteresis indicating that after an inter-radio access technology (RAT) handover from non-3GPP to 3GPP access, the UE should not switch RATs again based on ANDSF policies for the duration of the hysteresis (e.g. 20 minutes).

A UE contacts the ANDSF and receives all the information above (meaning the current standard discovery information plus ANDSF policies such as ISMP and ISRP). When arriving in the validity area (in time and space) of the Wi-Fi hotspot, it chooses to connect to the Wi-Fi network based on the policies received from the ANDSF. Once connected to the hotspot, it accesses the L-ANDSF fetching first over 802.11u the addressing and protocol to use to reach the L-ANDSF. If congestion occurs or the hotspot controller detects that it is no longer desirable to keep this UE on the Wi-Fi network (for instance by monitoring retransmissions errors), it sends a policy to move back to the cellular network. The hysteresis information previously received will ensure that the UE does not attempt to move back to the Wi-Fi network until the allocated time has elapsed.

According to another embodiment, corresponding to Wi-Fi offload in residential networks, a mobile operator that is also an ISP wishes to offload data traffic on the residential access points of his subscribers. Thus it equips its DSL boxes with an L-ANDSF. When connected on the macro cellular network, the UE receives the following information from the ANDSF:
- policy to prefer WLAN in the location of the subscriber home cell plus:
   ∘ local-ANDSF usage authorization in that home cell (this authorization only allows steering from Wi-Fi to 3G)
   ∘ public IP address (or FQDN) of the L-ANDSF hysteresis indicating that after an inter-RAT handover from non-3GPP to 3GPP access, the UE should not switch RATs again based on ANDSF policies for instance 20 minutes time.

A UE contacts the ANDSF and receives all the information above (meaning the current standard discovery information plus ANDSF policies such as ISMP and ISRP). When arriving at home, it chooses to connect to the Wi-Fi network based on the policies received from the ANDSF. Once connected to the access point, it accesses the L-ANDSF using the address received from ANDSF. If for instance the DSL line gets congested due to the traffic of several home users, the L-ANDSF may send a policy to the UE to migrate back to 3G. The hysteresis information previously received will ensure that the UE does not attempt to move back to the Wi-Fi network until the allocated time has elapsed.

According to another embodiment, corresponding to Wi-Fi offload in operator hotspots, a mobile operator that also owns Wi-Fi hotspots (or has a partnership with another operator) adds an L-ANDSF function co-located with the hotspot access controller. In addition to providing via the ANDSF a policy to prefer WLAN with the Service Set Identifier SSID of the hotspot in the location where such a hotspot is available, the ANDSF provides:
- L-ANDSF usage authorization in the location where the hotspot is available. This allows the L-ANDSF to bar the UE from the hotspot during the hysteresis time
   ∘ downgrading the priority for a BSSID (MAC @ of the AP)
- protocol to be used for L-ANDSF (for instance IEEE 802.11v).

A UE contacts the ANDSF and receives all the information above (meaning the current standard discovery information plus ANDSF policies such as ISMP and ISRP). When arriving in the validity area (in time and space) of the Wi-Fi hotspot, it chooses to connect to the Wi-Fi network based on the policies received from the ANDSF. Once connected to the hotspot, it uses 802.11v BSS transition management feature for choosing the best access point in the hotspot. If congestion occurs, the L-ANDSF will send a BSS transition management query with a preferred BSS list or barring certain BSSIDs.

According to another embodiment, corresponding to Wi-Fi offload in enterprise networks, an enterprise network is setup using femto cells. The femto base stations also have a co-located Wi-Fi access point ability. A Local-ANDSF function is co-located with the femto cell. Possibly due to different generations of equipment, that enterprise network is also including femto base stations without Wi-Fi ability. Those femto also do not have an L-ANDSF. The operator H-ANDSF cannot keep track of which cells can provide Wi-Fi service in the enterprise network and which cannot. The L-ANDSF function provides discovery information that could not have been available at the H-ANDSF level.

The policies provided by an L-ANDSF using OAM-DM based ANDSF could be both ISMP and ISRP. An example of use with ISRP could be that for a VolP or video streaming application for which usually operators prefer to use QoS-aware networks, if locally the monitoring shows that the right QoS conditions can be met (e.g. no interference, sole user) then the ISRP provided by the L-ANDSF could suggest to move a VolP or video streaming flow to the wifi interface.

The present invention allows offering an ANDSF solution that takes into account dynamic conditions on the Wi-Fi networks. The present invention allows adapting Wi-Fi offloads to local dynamic conditions under the full control of the operator.

## Claims

1. Communication process within a communication network, said communication network comprising an access network discovery and selection function ANDSF, an access network and a user endpoint UE, said ANDSF being a home ANDSF, H-ANDSF, or a visited ANDSF, V-ANDSF. said access network comprising a local ANDSF, L-ANDSF, said process comprising reception at the user endpoint UE of information and policies for discovery and usage of the L-ANDSF, said information and policies being received from the said ANDSF.

2. Communication process according to claim 1, wherein said information includes authorization information and/or addressing information and/or protocol information and/or hysteresis information.

3. Communication process according to claim 2, wherein said authorization information indicates to the UE conditions allowing usage of said L-ANDSF.

4. Communication process according to claim 2, wherein said addressing information indicates to the UE how to find at least one L-ANDSF.

5. Communication process according to claim 2, wherein said hysteresis information gives limits to the time where the L-ANDSF policy takes precedence over home or visited ANDSF policy.

6. Communication process according to claim 2, wherein said protocol information provided by the ANDSF indicates which protocols to use to reach the L-ANDSF.

7. Communication process according to claim 2, wherein said addressing information provided by the ANDSF indicates that the actual addressing and protocol to access to the L-ANDSF are provided using local layer 2 or radio signaling such as extensions to 802.11 u.

8. Communication network comprising an access network discovery and selection function ANDSF, an access network, and a user endpoint UE, said ANDSF being a home ANDSF, H-ANDSF, or a visited ANDSF, V-ANDSF, said access network comprising a local ANDSF, L-ANDSF, the user endpoint UE receiving from the ANDSF information and policies for discovery and usage of the said L-ANDSF, said information including authorization information and/or addressing information and/or protocol information and/or hysteresis information.

9. Communication network according to claim 8 wherein the L-ANDSF is located with a hotspot access controller or with a femto cell or with a DSL box or with an access point or with an aggregation gateway.

10. Communication network according to claim 8 or 9, wherein the ANDSF is adapted to provide public IP address or FQDN of the L-ANDSF.

11. Communication network according to claim 8 or 9, wherein the ANDSF is adapted to provide information to look for 802.11 u advertised L-ANDSF.

12. Communication network according to claim 8 or 9, wherein the ANDSF is adapted to provide information for use of 802.21 or 802.11v.

13. Communication network according to claim 8 or 9, wherein the ANDSF is adapted to provide information for use of extensions of ANQP queries as defined by the Hotspot2.0 specification.

14. Communication network according to claim any claim of 8 to 13, wherein the ANDSF is adapted to provide policy to prefer WLAN with the SSID of the hotspot and usage authorization in the location where the hotspot is available.

15. Communication network according to any claim 8 to 14, wherein the ANDSF is adapted to provide hysteresis indicating that after an inter RAT handover from non 3GPP to 3GPP access, the UE should not switch again based on ANDSF policies for the duration of the hysteresis.

16. Communication network according to claim 8 to 15, wherein the L-ANDSF is adapted to provide discovery information, inter-system mobility policies ISMP and/or inter-system routing policies ISRP.

## Patentansprüche

1. Kommunikationsablauf innerhalb eines Kommunikationsnetzwerks, wobei das Kommunikationsnetzwerk eine Zugangsnetzwerkentdeckungs- und -auswahlfunktion ANDSF, ein Zugangsnetzwerk und einen Nutzerendpunkt UE umfasst, wobei die besagte ANDSF eine Heim-ANDSF, H-ANDSF, oder eine besuchte ANDSF, V-ANDSF, ist, wobei das besagte Zugangsnetzwerk eine lokale ANDSF, L-ANDSF, umfasst, wobei der besagte Ablauf den Empfang von Informationen und Richtlinien für die Entdeckung und Nutzung der L-ANDSF am Nutzerendpunkt UE umfasst, wobei die besagten Informationen und Richtlinien von der besagten ANDSF empfangen werden.

2. Kommunikationsablauf nach Anspruch 1, wobei die besagten Informationen Berechtigungsinformationen und/oder Adressierungsinformationen und/oder Protokollinformationen und/oder Hystereseinformationen umfassen.

3. Kommunikationsablauf nach Anspruch 2, wobei die besagten Berechtigungsinformationen dem UE Bedingungen, welche die Nutzung der besagten L-ANDSF ermöglichen, anzeigen.

4. Kommunikationsablauf nach Anspruch 2, wobei die besagten Adressierungsinformationen dem UE anzeigen, wie er mindestens eine L-ANDSF finden kann.

5. Kommunikationsablauf nach Anspruch 2, wobei die besagten Hystereseinformationen den Zeitraum, während welchem die L-ANDSF-Richtlinie gegenüber der Heim- oder besuchten ANDSF-Richtlinie Vorrang hat, befristen.

6. Kommunikationsablauf nach Anspruch 2, wobei die besagten von der ANDSF bereitgestellten Protokollinformationen anzeigen, welches Protokoll zu verwenden ist, um die L-ANDSF zu erreichen.

7. Kommunikationsablauf nach Anspruch 2, wobei die besagten von der ANDSF bereitgestellten Adressierungsinformationen anzeigen, dass die aktuelle Adressierung und das Protokoll für den Zugriff auf die L-ANDSF unter Verwendung der lokalen Schicht 2 oder von Funksignalisierung wie Erweiterungen bis 802.11 u bereitgestellt werden.

8. Kommunikationsnetzwerk, umfassend eine Zugangsnetzwerkentdeckungs- und -auswahlfunktion ANDSF, ein Zugangsnetzwerk und einen Nutzerendpunkt UE, wobei die besagte ANDSF eine Heim-ANDSF, H-ANDSF, oder eine besuchte ANDSF, V-ANDSF, ist, wobei das besagte Zugangsnetzwerk eine lokale ANDSF, L-ANDSF, umfasst, wobei der Nutzerendpunkt UE von der ANDSF Informationen und Richtlinien für die Entdeckung und Nutzung der besagten L-ANDSF empfängt, wobei die besagten Informationen Berechtigungsinformationen und/oder Adressierungsinformationen und/oder Protokollinformationen und/oder Hystereseinformationen umfassen.

9. Kommunikationsnetzwerk nach Anspruch 8, wobei sich die ANDSF in einer Hotspot-Zugriffssteuerung oder in einer Femtozelle oder in einer DSL-Box oder an einem Zugangspunkt oder in einem Aggregations-Gateway befindet.

10. Kommunikationsnetzwerk nach Anspruch 8 oder 9, wobei die ANDSF für die Bereitstellung einer öffentlichen IP-Adresse, eines FQDN oder der L-ANDSF ausgelegt ist.

11. Kommunikationsnetzwerk nach Anspruch 8 oder 9, wobei die ANDSF für die Bereitstellung von Informationen für die Suche nach der in 802.11u bekannt gemachten L-ANDSF ausgelegt ist.

12. Kommunikationsnetzwerk nach Anspruch 8 oder 9, wobei die ANDSF für die Bereitstellung von Informationen für die Nutzung von 802.21 oder 802.11v ausgelegt ist.

13. Kommunikationsnetzwerk nach Anspruch 8 oder 9, wobei die ANDSF für die Bereitstellung von Informationen für die Nutzung von Erweiterungen von ANQP-Abfragen, wie in der Hotspot 2.0-Spezifikation definiert, ausgelegt ist.

14. Kommunikationsnetzwerk nach einem beliebigen der Ansprüche 8 bis 13, wobei die ANDSF für die Bereitstellung einer Richtlinie zur Bevorzugung des WLAN mit der SSID des Hotspots und Nutzungsberechtigung an dem Ort, an welchem der Hotspot verfügbar ist, ausgelegt ist.

15. Kommunikationsnetzwerk nach einem beliebigen der Ansprüche 8 bis 14, wobei die ANDSF für die Bereitstellung einer Hysterese, welche anzeigt, dass der UE nach einem Inter-RAT-Handover von Nicht-3GPP an einen 3GPP-Zugang auf der Basis von ANDSF-Richtlinien während der Dauer der Hysterese nicht nochmals umschalten sollte, ausgelegt ist.

16. Kommunikationsnetzwerk nach Anspruch 8 bis 15, wobei die L-ANDSF für die Bereitstellung von Entdeckungsinformationen, Intersystem-Mobilitätsrichtlinien ISMP und/oder Intersystem-Routing-Richtlinien ISRP ausgelegt ist.

## Revendications

1. Processus de communication dans un réseau de communication, ledit réseau de communication comprenant une fonction de découverte et de sélection de réseau d'accès ANDSF, un réseau d'accès et un point d'extrémité d'utilisateur UE, ledit ANDSF étant un ANDSF domestique, H-ANDSF, ou un ANDSF visité, V-ANDSF, ledit réseau d'accès comprenant un ANDSF local, L-ANDSF, ledit processus comprenant la réception au niveau du point d'extrémité d'utilisateur UE d'informations et de politiques de découverte et d'utilisation du L-ANDSF, lesdites informations et politiques provenant dudit ANDSF.

2. Processus de communication selon la revendication 1, dans lequel lesdites informations comprennent des informations d'autorisation et/ou des informations d'adressage et/ou des informations de protocole et/ou des informations d'hystérésis.

3. Processus de communication selon la revendication 2, dans lequel lesdites informations d'autorisation indiquent à l'UE des conditions permettant l'utilisation dudit L-ANDSF.

4. Processus de communication selon la revendication 2, dans lequel lesdites informations d'adressage indiquent à l'UE comment trouver au moins un L-ANDSF.

5. Processus de communication selon la revendication 2, dans lequel lesdites informations d'hystérésis limitent la durée pendant laquelle la politique L-ANDSF est prioritaire par rapport à la politique ANDSF domestique ou visité.

6. Processus de communication selon la revendication 2, dans lequel lesdites informations de protocole fournies par l'ANDSF indiquent quels protocoles utiliser pour atteindre le L-ANDSF.

7. Processus de communication selon la revendication 2, dans lequel lesdites informations d'adressage fournies par l'ANDSF indiquent que l'adressage et le protocole réels pour accéder au L-ANDSF sont fournis en utilisant la couche locale 2 ou la signalisation radio comme les extensions à la norme 802.11 u.

8. Réseau de communication comprenant une fonction de découverte et de sélection de réseau d'accès ANDSF, un réseau d'accès, et un point d'extrémité d'utilisateur UE, ledit ANDSF étant un ANDSF domestique, H-ANDSF, ou un ANDSF visité, V-ANDSF, ledit réseau d'accès comprenant un ANDSF local, L-ANDSF, le point d'extrémité d'utilisateur UE recevant à partir de l'ANDSF des informations et des politiques pour la découverte et l'utilisation dudit L-ANDSF, lesdites informations comprenant des informations d'autorisation et/ou des informations d'adressage et/ou des informations de protocole et/ou des informations d'hystérésis.

9. Réseau de communication selon la revendication 8 dans lequel le L-ANDSF est localisé avec un contrôleur d'accès au point d'accès sans fil ou avec une femtocellule ou avec un boîtier DSL ou avec un point d'accès ou avec une passerelle d'agrégation.

10. Réseau de communication selon la revendication 8 ou 9, dans lequel l'ANDSF est adapté pour fournir une adresse IP publique ou un FQDN du L-ANDSF.

11. Réseau de communication selon la revendication 8 ou 9, dans lequel l'ANDSF est adapté pour fournir des informations pour rechercher le L-ANDSF annoncé par la norme 802.11 u.

12. Réseau de communication selon la revendication 8 ou 9, dans lequel l'ANDSF est adapté pour fournir des informations pour l'utilisation de la norme 802.21 ou 802.11v.

13. Réseau de communication selon la revendication 8 ou 9, dans lequel l'ANDSF est adapté pour fournir des informations pour l'utilisation d'extensions de demandes ANQP comme cela est défini par la spécification du Hotspot2.0.

14. Réseau de communication selon l'une quelconque des revendications 8 à 13, dans lequel l'ANDSF est adapté pour fournir une politique pour préférer le WLAN ayant le SSID du point d'accès sans fil et pour permettre l'autorisation d'utilisation à l'emplacement où le point d'accès sans fil est disponible.

15. Réseau de communication selon l'une quelconque des revendications 8 à 14, dans lequel l'ANDSF est adapté pour fournir une hystérésis indiquant qu'après un transfert inter-RAT d'accès non 3GPP à 3GPP, l'UE ne doit pas commuter à nouveau en fonction des politiques ANDSF pendant la durée de l'hystérésis.

16. Réseau de communication selon les revendications 8 à 15, dans lequel le L-ANDSF est adapté pour fournir des informations de découverte, des politiques de mobilité inter-système ISMP et/ou des politiques de routage inter-système ISRP.
